# EUROPEAN PATENT SPECIFICATION

(11) **EP 1 024 994 B1**
(45) Date of publication and mention of the grant of the patent: **29.11.2006**
(21) Application number: 99939556.9
(22) Date of filing: 26.08.1999
(51) Int. Cl.: B62K 25/28, B62K 19/34

(54) **FULL FLOATING DOUBLE ACTION BICYCLE SUSPENSION SYSTEM**
FAHRRADAUFHÄNGUNGSVORRICHTUNG
SYSTEME DE SUSPENSION ELASTIQUE ET A DOUBLE ACTION DE BICYCLETTE

(30) Priority: 31.08.1998 GR 98100322
(43) Date of publication of application: 09.08.2000
(73) Proprietor: Smirneos, John Nelson, 11521 Ampelokipi, Athens (GR)
(72) Inventor: Smirneos, John Nelson, 11521 Ampelokipi, Athens (GR)
(86) International application number: PCT/GR1999/000031
(87) International publication number: WO 2000/012376

(56) References cited:
- EP-A- 0 913 322
- DE-A- 4 435 482
- US-A- 5 452 910

## Description

### Field of the invention

The present invention is directed to a suspension system that is particularly useful for the off-road bicycles better known as mountain bikes.

### Background of the invention

The use of full suspension bikes is widespread in all-terrain (mountain) biking and especially in downhill racing.

In most rear wheel suspension systems on all-terrain bicycles, depending on the design, a number of problems arise such as: the biopacing effect, where the forces produced by the pedaling effort tend to pull the rear suspension making it sink periodically following the pedaling movement; the chain drag when the rear axle goes above the pivot point, and the chain tends to pull the suspension in further compression; the unwanted compression of the rear system when the bike is climbing on steep terrain, and the center of gravity moves backward, overloading the rear of the bike, exaggerating the suspension; and the difficulty of fine tuning the front derailleur owing to the movement of the drivetrain discs.

To overcome these problems, the pivot point of many suspension units has been raised above the large drivetrain ring, or bottom bracket, or the pivot and rear axle have been placed on the same moving frame, usually called the unified rear arm.

Although some of these problems have been solved in various designs, most full suspension bikes are used only in the downhill competition field.

### Brief summary of the invention

The present invention is directed to a suspension system which, in addition to the main suspension arm that holds the rear wheel, includes a secondary smaller arm under the main one. The two arms are connected through a straight, connecting link. The shock absorber is located between the two arms.

The present invention aims to overcome the problems arising in most of the existing designs, such as the biopacing ("sinking") effect on the pedaling movement; the chain drag due to the chain force pulling the suspension in further compression; the unwanted compression when the bike is climbing steep terrain; and the difficulty of fine tuning the front derailleur due to the movement of the drivetrain discs. This is achieved by placing the bottom bracket axle on an independent arm, the secondary arm, which moves in conjunction with the main suspension arm.

Looking at the plans, we can see that the full floating double action bicycle suspension system (the present invention) has certain advantages, such as the option of pretuning suspension travel in six different ways, the ability to increase or reduce the suspension rate drastically by changing the rider's position; the elimination of the acceleration-created "sag"; the elimination of the biopacing effect; and the complete alignment of the front derailleur with the drivetrain discs.

### Brief description of the several views of the drawings

The present invention is described in the following drawings:
FIG. 1. This is a side view of a bicycle with a full floating double action bicycle suspension system; a front suspension system; wheels; and a full transmission system.
FIG. 2 This is a side view of the main frame with the rear suspension system.
FIG. 3. This is a cutout of the side view of the main frame with the rear suspension system.
FIG. 4. This is an enlargement of the cutout side view of the main frame with the rear suspension system.
FIG. 5. This is a cutout of the front view of the connecting link.

### Detailed description of the invention

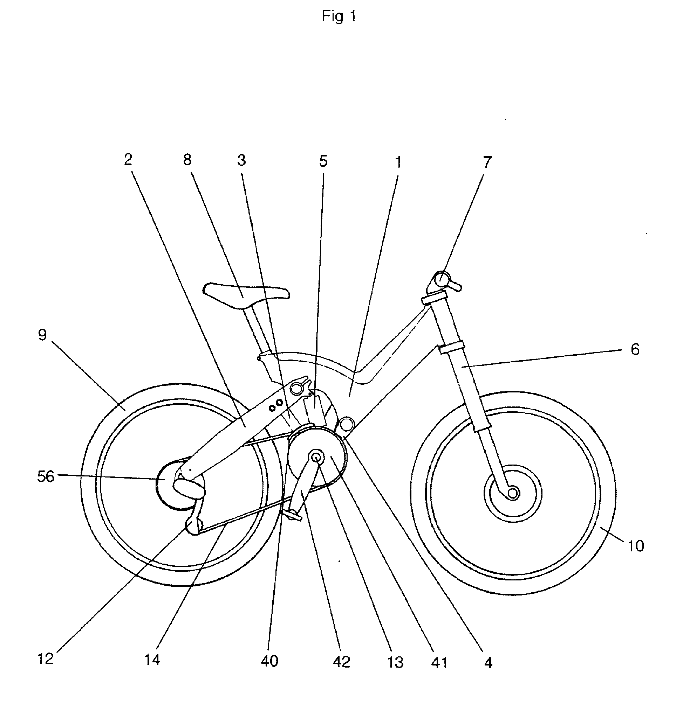

In FIG 1 a bicycle is shown in which the front suspension mechanism (fork) (6) is connected to the main frame (1). The steering bar (7) is attached to the top of the fork. The front wheel (10) is attached to the bottom of the fork. The saddle (8) is attached to the rear of the main frame. The main suspension arm (2) is under the saddle. Behind the main suspension arm is the rear wheel (9) which is attached to the cassette (56) and the rear derailleur (12). Under the main suspension arm is the secondary suspension arm (4) to which the drivetrain discs (41) are attached, as are the pedals (42) and the pedal axle (13). The main suspension arm is connected to the secondary suspension by the connecting link (3). The shock absorber (5) is located between the two arms. The transmission chain (14) is located between the drivetrain discs (41) and the cassette (56).

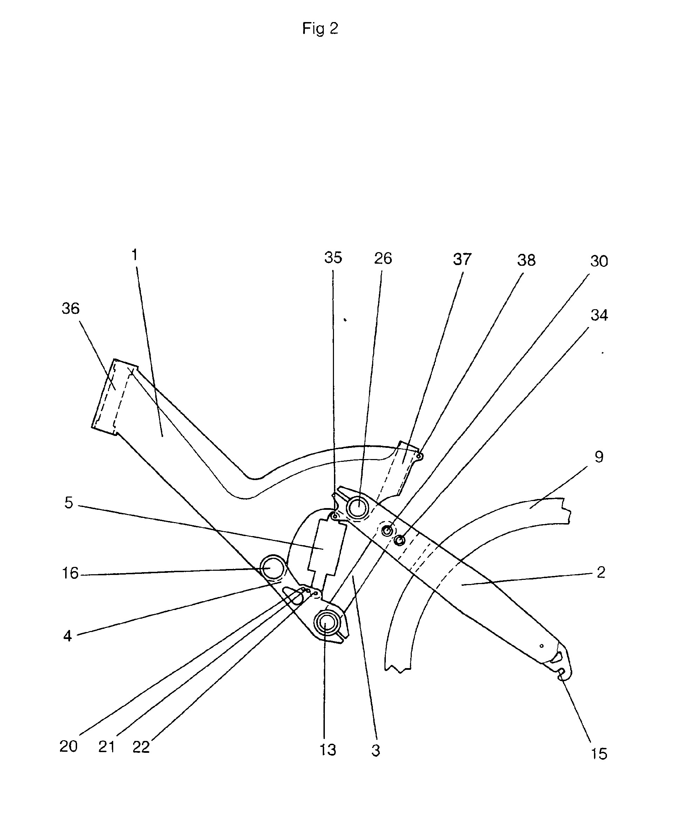

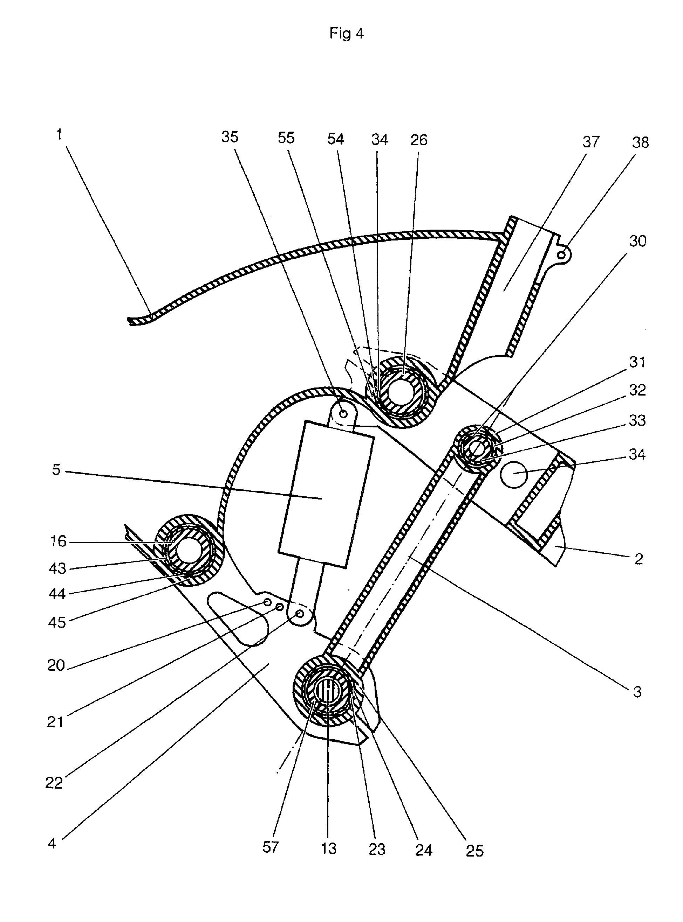

FIGS 2, 3 and 4 show a more detailed view of the main frame (1). At the front of the main frame is the steerer tube roller bearing mount (36), while in the rear is the seatmast mount (37) and close (38). The main suspension arm (2) and the secondary suspension arm (4) are also attached to the rear of the main frame. The front end of the main suspension arm (2) is attached to the frame (1) by a pivot (26), the pivot's roller bearings (34, 54) and the roller bearing mount (55). At the rear end, the dropouts (15) hold the rear wheel (9). Under the main suspension arm (2) is the secondary suspension arm (4). The front end of the secondary suspension arm (4) is attached to the frame (1) by a pivot (16), the pivot's roller bearings (43, 44) and the roller bearing mount (45). The bottom bracket tube (57) containing the bottom bracket axle (13) is attached to the rear end of the secondary suspension arm. The main suspension arm (2) is connected to the secondary suspension arm (4) by the connecting link (3). The upper end of the connecting link (3) is attached to the main suspension arm (4) by a pivot (30), the pivot's roller bearings (32, 33) and the roller bearing mount (31 or 34). The lower end of the connecting link is attached to the secondary suspension arm (4) by the bottom bracket tube (57), the bottom bracket tube roller bearings (23, 24) and the roller bearing mount (25). The bottom bracket tube (57) also functions as a pivot attaching the connecting link (3) to the secondary suspension arm (4). The shock absorber (5) is located between the suspension parts (2, 3, 4) and the main frame (1). The upper end of the shock absorber (5) is attached to the shock mount (35) of the main suspension arm. The lower end of the shock absorber is attached to one of the three optional positions (20, 21, 22) of the secondary suspension arm (4).

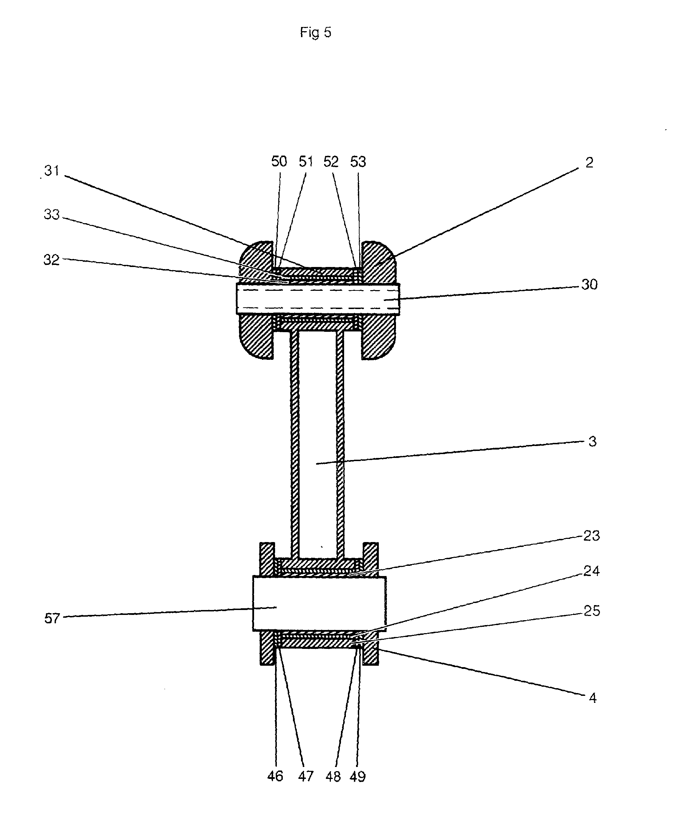

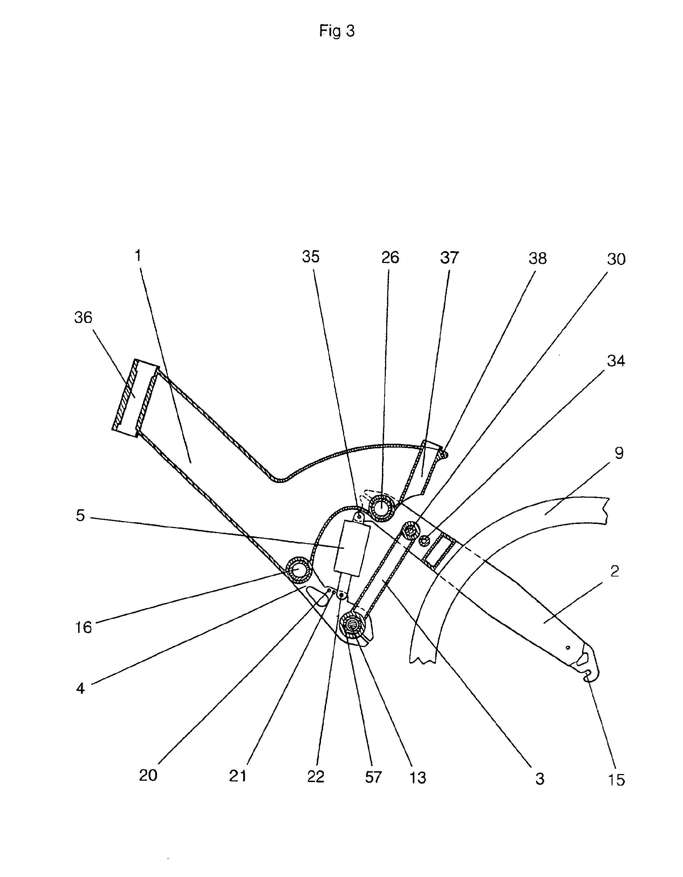

FIG. 5 shows a cutout of the front view of connecting link (3), one part of the main suspension arm (2), and the secondary suspension arm (4). The upper end of the connecting link (3) is attached to the main suspension arm (2) by a pivot (30), the pivot's roller bearings (32, 33), the pivot's side sliders (50, 51, 52, 53) and the roller bearing mount (31). The lower end of the connecting link is attached to the secondary suspension arm (4) by the bottom bracket tube (57), the bottom bracket tube roller bearings (23, 24), the pivot's side sliders (46, 47, 48, 49) and the roller bearing mount (25).

When the suspension is activated, the secondary suspension arm (2) pulls the connecting link (3) which in turn pulls the secondary suspension arm (4) upward.
By placing the shock absorber (5) between two opposite moving arms, the main suspension arm's shock mount (35) which moves downwards and the secondary suspension arm (4) which moves upward, we have compression (or extension if the arms are moving in the opposite direction) of a full floating shock by double action because both arms are moving, unlike the traditional designs in which one end of the shock absorber is attached to the frame.

The upward movement of the secondary suspension arm (4) compresses the shock absorber (5) more than the downward movement of the main suspension arm's shock mount (35). By compressing the shock absorber (5) in this order, the suspension system gains the following advantages:
A) The ability to pretune suspension travel. The ability to choose one of the three different shock mounts (20, 21, 22) makes it possible for the secondary suspension arm (4) to deliver a different torque to the shock absorber.
B) The ability to pretune the main suspension arm torque delivered by the connecting link (3) to the secondary suspension arm. This can be achieved by altering the distance between the upper connecting link pivot and the main suspension arm pivot (26), by choosing one of the two different pivot positions (30, 34).
C) The ability to increase or reduce the stiffness of the suspension by changing,the rider's position. When pedaling out of the saddle, a style used mainly for climbing steep terrain, the suspension stiffens as the rider's weight is loaded onto the bottom bracket axle (13). This happens because the bottom bracket tube, when bearing the load of the bottom bracket axle, pulls down the secondary suspension arm (4) which in turn pulls the connecting link (3) that finally pulls the main suspension arm (2) toward the ground. This action reduces the load delivered by the main suspension arm (2) to the shock absorber, making the whole system stiffer, and thereby reducing the unwanted "sag" of the rear suspension caused by overloading when climbing.
D) Elimination of the biopacing effect. Each downward pedal stroke produces torque that stiffens the suspension by pulling the main suspension arm (2) downwards through the system of the connecting link (3) and the secondary suspension arm (4).
E) Elimination of the unwanted "sag" due to the acceleration of the bike. This is achieved by taking advantage of the pedaling pressure on the system (as in D) and the torque produced by the transmission chain (14) between the drivetrain discs (41) and the rear dropouts (15), to which the rear wheel (9) axle is attached.
F) Full alignment of the front derailleur with the drivetrain discs during the entire suspension travel.

This design offers six basic suspension adjustments: Three optical positions (20, 21, 22) for the shock absorber (5) located on the secondary suspension arm (4), combined with the two optional positions of the connecting link (3). These adjustments, together with shock compression and rebound adjustments, offer a wide variety of suspension behavior, without compromising the performance of the front derailleur (40).

## Claims

1. A bicycle suspension system that, comprising a main suspension arm (2) holding a rear wheel (9), a secondary smaller arm (4) under the main arm (2), the two arms being connected through a straight connecting link (3), a shock absorber (5) being located between the two arms, the suspension system being of the full floating double action type and further comprises a bottom bracket tube (57) which is located on the secondary suspension arm (4) and rotates through a roller bearing system (23, 24, 25, 46, 47, 48, 49) like a pivot to connect the secondary suspension arm (4) to the connecting link (3), which despite being moveable, is in constant alignment to drivetrain discs (41), thus offering full alignment of a front derailleur (40) and the drivetrain discs (41) during the entire suspension travel.

## Patentansprüche

1. Ein Fahrradaufhängungssystem, das, bestehend aus einem Hauptaufhängearm (2), welcher das Rückrad (9) hält, einem zweiten, kleineren Arm (4) unterhalb des Hauptarms(2), wobei die beiden Arme durch ein gerades Verbindungsglied (3) miteinander verbunden sind, und einem Stoßdämpfer (5), der sich zwischen den beiden Armen befindet, ein Aufhängungssystem des full floating Double-Action-Typs darstellt und darüber hinaus ein unteres Halterohr (57) aufweist, das sich auf dem zweiten Aufhängearm (4) befindet, mittels eines Rollenlagersystem (23, 24, 25, 46, 47, 48, 49) einem Drehzapfen gleich rotiert und den zweiten Aufhängearm (4) mit dem Verbindungsglied (3) verbindet, wodurch sich dieses Verbindungsglied, obgleich beweglich, konstant an den Kettenantriebsscheiben (41) ausgerichtet ist und somit während des gesamten Umlaufs volle Abstimmung einer Vordergangschaltung (40) mit den Kettenantriebsscheiben (41) bietet.

## Revendications

1. Système de suspension de bicyclette comprenant un bras de suspension principal (2) maintenant la roue arrière (9), un bras de suspension secondaire plus petit (4) sous le bras principal, les deux bras étant reliés par une barre de jonction droite (3), un amortisseur (5) situé entre les deux bras, le système de suspension étant de type flottant à double action et comprenant en outre un tube de l'axe de pédalier (57) situé sur le bras secondaire (4) et effectuant un mouvement rotatif au moyen d'un système à roulements (23,24,25,46,47,48,49) comme un pivot pour relier le bras de suspension secondaire (4) à la barre de jonction (3) qui, bien que mobile, reste constamment dans l'alignement des disques de transmission (41), assurant ainsi le parfait alignement du dérailleur antérieur (40) et des disques de transmission sur toute l'amplitude du mouvement de suspension.
